# EUROPEAN PATENT SPECIFICATION

(11) **EP 3 112 142 B1**
(45) Date of publication and mention of the grant of the patent: **25.12.2019**
(21) Application number: 16175063.3
(22) Date of filing: 17.06.2016
(51) Int. Cl.: B29K 19/00, B29C 48/30, B29C 48/03, B29D 30/62, B29D 30/30, B29C 48/35

(54) **APPARATUS AND METHOD FOR FORMING AN ELASTOMERIC STRIP**
VORRICHTUNG UND VERFAHREN ZUR HERSTELLUNG EINES ELASTOMERSTREIFENS
APPAREIL ET PROCÉDÉ DE FORMATION D'UNE BANDE ÉLASTOMÈRE

(30) Priority: 30.06.2015 US 201562186730 P; 30.06.2015 US 201562186699 P
(43) Date of publication of application: 04.01.2017
(73) Proprietor: The Goodyear Tire & Rubber Company, Akron, Ohio 44316 (US)
(72) Inventor: BURG, Gary Robert, Massillon, OH 44646 (US); DYRLUND, Christopher David, Canton, OH 44705 (US)
(74) Representative: Kutsch, Bernd

(56) References cited:
- US-A- 4 927 482
- US-A- 4 963 207
- US-A1- 2009 274 786
- US-A1- 2011 052 827
- US-A1- 2013 020 737
- US-B1- 6 372 070

## Description

### Technical Field

This invention relates to an apparatus and to a method for forming an elastomeric strip.

### Background of the Invention

It is well known in the prior art to manufacture tire components from elastomeric sheets of rubber which are then cut to length with the ends joined together by a lap or butt splice onto a cylindrically shaped building drum. Since the tire components are assembled flat onto a cylindrical tire building drum and then expanded into a toroidal shape, each component has to be placed in tension or compression prior to being molded. This stretching of the various parts causes slippage between the various rubber parts as the components heat up during vulcanization. Attempts to minimize the slippage of the various parts have been attempted. Another disadvantage is that the tire has components which are spliced, wherein the splices contribute to tire non-uniformity.

Tire manufacturers have been increasingly focusing their efforts on eliminating tire non-uniformities. More recently, tire manufacturers are making tire components from a continuous strip of unvulcanized rubber. A thin, narrow strip of unvulcanized rubber is circumferentially wound multiple times onto a rotating drum or toroid shaped core, wherein the strips are successively layered or stacked in order to form the desired shape of the tire component. See for example, US-A-6,372,070 and US-A-4,963,207. The strip of rubber is typically extruded directly onto a tire building drum or toroidal-shaped core using an extruding device. Alternatively the strips may be formed from calendering and then conveyed to the tire drum or core.

This strip lamination method of forming tire components has the advantage of eliminating splices because the annular tire component is typically formed of one continuous strip. Strip lamination has the further advantage of allowing flexibility in manufacturing, since the tire component profile may be changed from tire to tire.

It is known to extrude the rubber through a nozzle or shaping die and to apply the strip of rubber using a roller or stitcher to a tire building drum. However, these systems typically have the disadvantage of causing high pressure and high temperature of the rubber in the system due to the small exit area opening. If the residence time of the rubber is too slow through the system, the rubber may be scorched if the temperature is too high. Thus it is desired to have an improved system which will lower the system temperature and pressure while forming the desired shape of the rubber strip.

US-A-2009/0274786 describes a device for extruding a strip of rubber onto a rotary roller for forming and driving the strip. The device also comprises a shutter for shutting the forming passage. The roller is located across from the outlet of the extruder.

US-A-2013/0020737 describes an extrusion device comprising a pair of mating die lips having sculpted surfaces and defining a die exit for an extrudate. The extrudate is deposited on the surface of a roller.

US-B1-6,372,070 describes a process and an apparatus for laying rubber materials for tire-constitutional members.

### Summary of the Invention

The invention relates to an apparatus in accordance with claim 1 and to a method in accordance with claim 10.

Dependent claims refer to preferred embodiments of the invention.

In a preferred aspect of the method in accordance with the invention, wherein the nozzle has a shaped die surface that cooperates with the curved outer surface of the roller to form a nozzle outlet.

In a preferred aspect of the method in accordance with the invention, the opening of the nozzle is located on a lower curved surface.

In a preferred aspect of the method in accordance with the invention, the roller outer surface has a temperature in the range of from 93°C to 177°C.

In a preferred aspect of the method in accordance with the invention, the pumping means is an extruder or an extruder in combination with a gear pump.

In a preferred aspect of the method in accordance with the invention, the outlet of the nozzle has a V-shaped outlet.

In another aspect of the invention, a method of forming a strip of elastomeric material is disclosed, the method comprising the steps of: positioning a lower curved surface of a nozzle in mating engagement with a rotatable roller, pumping an elastomeric material through the nozzle, said nozzle having an outlet on the lower surface, extruding the molten elastomeric material onto the roller outer surface and then extruding the molten elastomeric material through the outlet of the nozzle forming a shaped strip.

In a preferred aspect of this method, the nozzle compresses said elastomeric material directly onto the outer surface of the roller. In a preferred aspect of the invention, the elastomeric material is in a molten state in the nozzle. In another preferred aspect of the invention, the elastomeric material is in a molten state in the apparatus. In yet another preferred aspect of the invention, the elastomeric material is in a molten state prior to entering the apparatus. In yet another preferred aspect of the invention, the elastomeric material is in a molten state when it is applied to the roller outer surface. Preferably, the nozzle has a shaped die surface that cooperates with the curved outer surface of the roller to form a nozzle outlet. The roller outer surface preferably has a temperature in the range of from 93°C to 177°C. Preferably, the pumping means is an extruder or an extruder in combination with a gear pump. In one aspect of the invention, the apparatus may have an interior channel decreases in area. The outlet of the nozzle preferably has a V-shape.

In another aspect of the invention, a method of forming a rubber article is disclosed, the method comprising the steps of: positioning a lower curved surface of a nozzle in mating engagement with a rotatable roller, pumping an elastomeric material through the nozzle, said nozzle having an outlet on the lower surface so that the molten elastomeric material is pulled by the rotating roller through the outlet of the nozzle forming a shaped strip, and then applying the strip to a tire building drum.

In yet another aspect of the invention, a nozzle and roller apparatus is disclosed comprising a rotatable roller having an outer surface and a nozzle having an inlet and an outlet, said nozzle having a curved surface having an opening, wherein the curved surface is positioned in mating engagement with an outer surface of a rotatable roller. The outlet of the nozzle preferably further includes a die. In a preferred aspect of the invention, the outlet of the nozzle is formed between the roller outer surface and the curved surface of the nozzle. The the roller is preferably pivotally mounted so it can pivot about a fixed point.

### Definitions

"Axial" and "axially" means lines or directions that are parallel to the axis of rotation of the tire;
"Circumferential" means lines or directions extending along the perimeter of the surface of the annular tread perpendicular to the axial direction;
"Radial" and "radially" means directions radially toward or away from the axis of rotation of the tire.

### Brief Description of the Drawings

The invention will be described by way of example and with reference to the accompanying drawings in which:
Figure 1 is a perspective view of a rubber applicator apparatus of the present invention;
Figure 2 is a close-up perspective view of a roller and nozzle of the rubber applicator apparatus of the present invention;
Figure 3 is a side cross-sectional view of the apparatus of Figure 1;
Figure 4 is a side view of the roller and nozzle wherein the nozzle is shown with half the nozzle removed;
Figure 5 is a side view of the nozzle;
Figure 6 is a perspective view of the nozzle outlet;
Figure 7 is an end view of the outlet of the nozzle; and
Figure 8 is a side view of the rubber applicator apparatus shown applying a rubber strip to a tire building drum.

### Detailed Description of Example Embodiments of the Invention

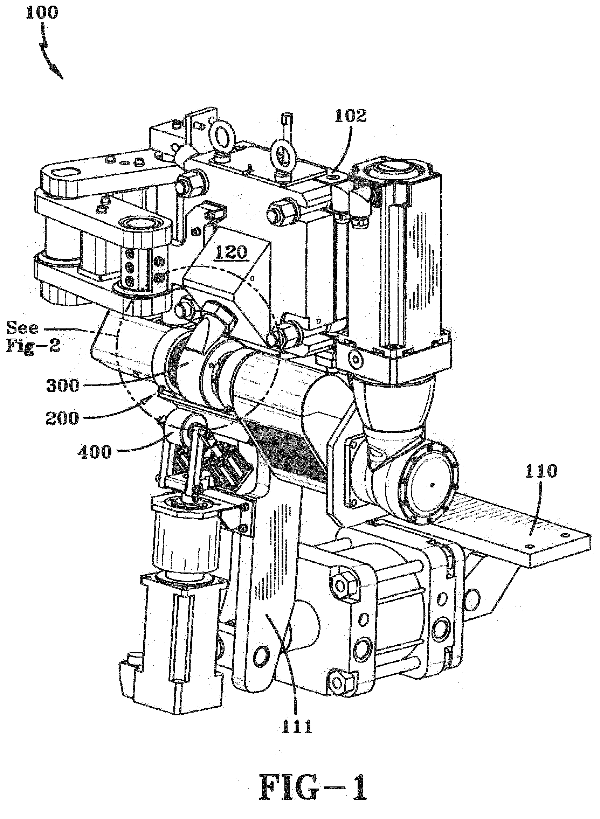

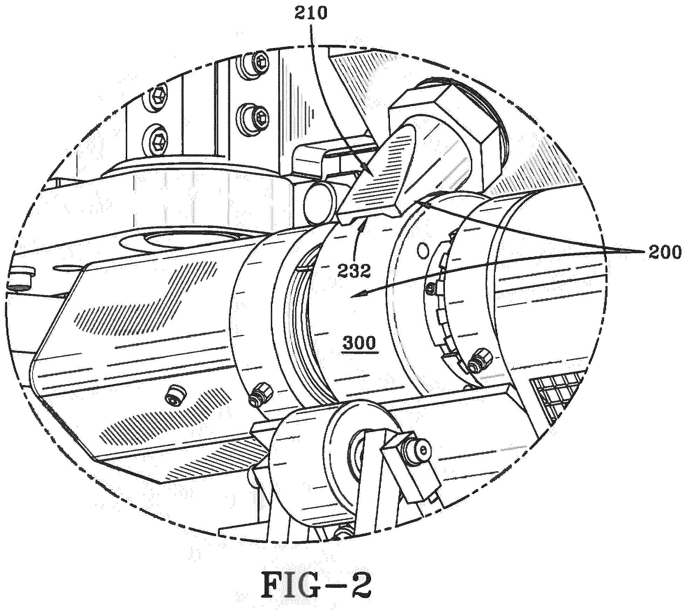

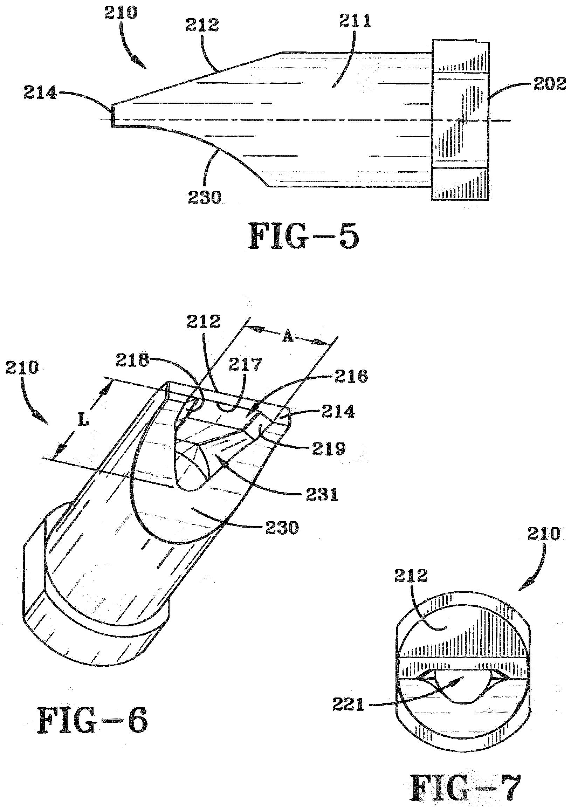

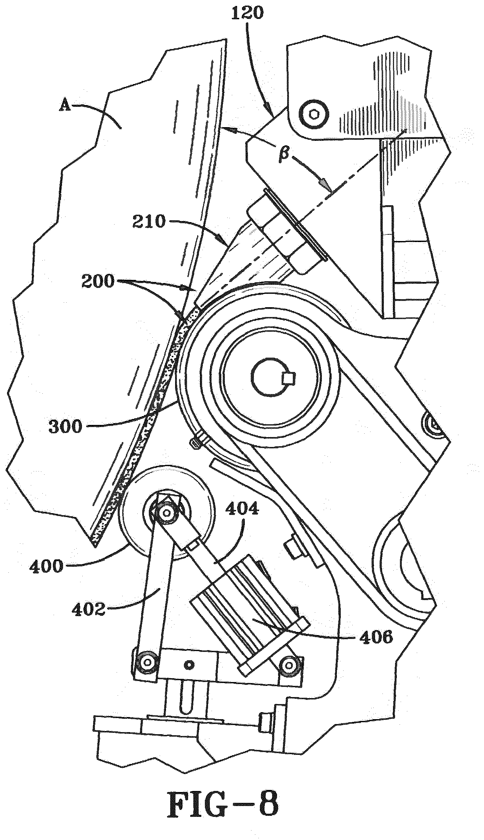

A first embodiment of a rubber applicator apparatus 100 is shown in Figures 1-7. The applicator apparatus 100 provides a novel apparatus to form elastomeric tire components quickly and efficiently from a single continuously wound strip or multiple strips of unvulcanized rubber. A continuous strip of unvulcanized rubber may be applied directly onto a tire building surface such as a tire building drum A as shown in Figure 8, or a toroidal shaped core (not shown).

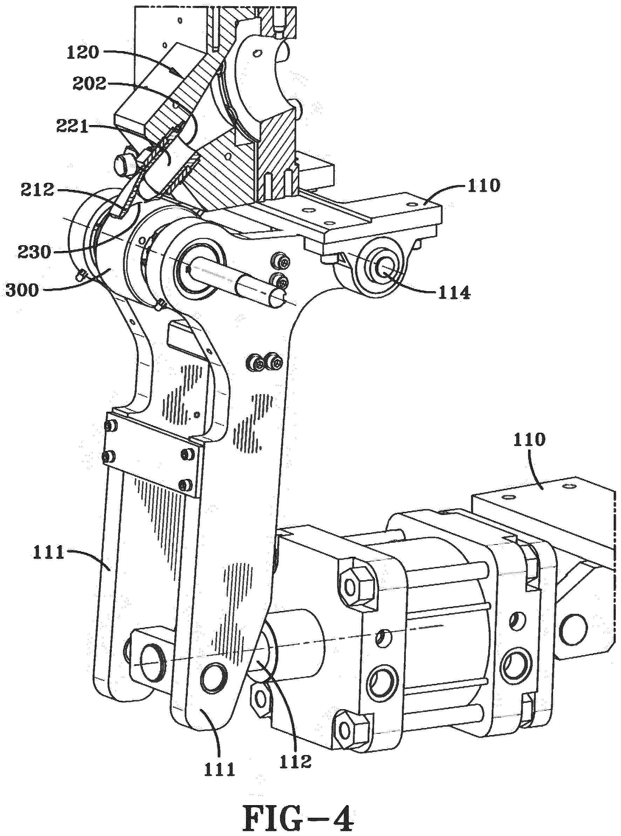

As shown in Figure 1, the applicator apparatus 100 includes a support frame 110 (parts of which have been removed for clarity), and a roller nozzle 200. The support frame may further include support rails for translating the entire applicator apparatus in the X, Y and Z direction (not shown). A rotatable linkage 111 is mounted to the support frame 110, and functions to pivot the roller 300 about fixed point 114 as shown in Figure 4. The rotatable linkage 111 is connected to actuator arm 112 which translates fore and aft to pivot the rotatable linkage 111 about the fixed point 114.

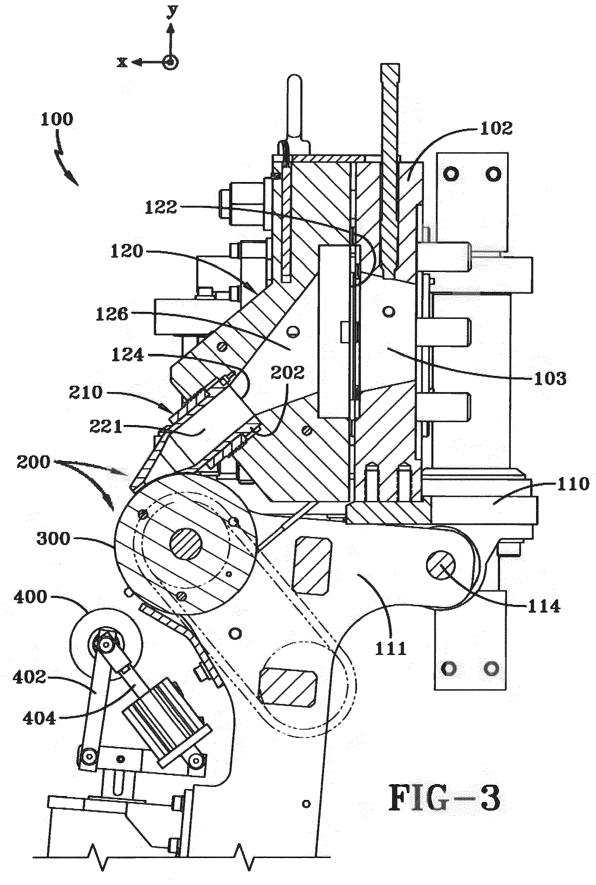

As shown in Figure 3, the support frame 110 includes a mounting flange 102 for connecting to a rubber pumping means such as an extruder, gear pump, extruder-gear pump combination, or rubber injector (not shown). An extruder suitable for use with the invention is made by AZ Formen und Maschinenbau of Munich, Germany. The rubber or elastomer output from the rubber pumping means is fed into an internal passage 103 of the mounting flange and then into a transition member 120. The transition member 120 has an interior channel 126 having an inlet end 122 and an outlet end 124. The inlet end 122 preferably has a larger area than the outlet end 124, resulting in a decreasing area or a funnel-shaped channel 126. Channel 126 is also angled downwardly in the range of about 30 to about 75 degrees with respect to the X axis, more typically 45- 60 degrees. The outlet end 124 of the transition member is connected to an inlet end 202 of a nozzle 210.

The nozzle 210, as best shown in Figures 3-7, has a generally cylindrically shaped outer body 211 terminating in an angled face 212 at the nozzle outlet 223. The nozzle has an interior channel 221 that has a decreasing area from the inlet end 202 to the outlet orifice 223 of the nozzle. The angled face 212 of the nozzle terminates in an edge 214. The edge 214 forms a juncture between the angled face 212 and a curved outlet surface 230 of the nozzle. The lower surface of the edge 214 has a shaped die surface 216 that cooperates with the curved outer surface of the roller 300 to form the nozzle outlet. The shaped die surface 216 in this example, has a flat edge 217 with opposed beveled ends 218, 219 which forms a strip with beveled edges. The die shape is not limited to the configuration shown, and may form other shapes as desired. The curved lower surface 230 of the nozzle is shaped to cooperate with the outer surface of roller 300 in order to form the strip. The lower surface of the nozzle has an opening 231 that is preferably V-shaped. The opening 231 has an axial width A and a longitudinal length L, wherein the length is greater than 1.5 times the axial width A. The opening 231 is wide to allow the rubber to engage the outer surface of the roller 300 before exiting the outlet 232. The wide opening allows the rubber or elastomer to engage the outer surface of the roller. As the roller 300 rotates, the outer surface of the roller 300 engages the rubber flowing through the nozzle, and pulls the rubber towards the nozzle outlet 232. The pulling of the rubber by the roller lowers the internal pressure and temperature of the rubber as it travels through the system 100. The lower extrusion temperatures reduce stretch of the rubber. As the rubber is pulled towards the nozzle outlet 232, it is shaped by die surfaces 217, 218, 219 of the upper edge 214 and the roller outer surface 300. Preferably, the roller 300 is heated.

The outlet die surfaces 217, 218, 219 of the nozzle is shown with a trapezoidal shape, however other configurations may be used such as, but not limited to, square, rectangular, triangular, etc. The width of the rubber strip output from the nozzle orifice is typically 15 mm in width, but may vary in the range of from 5 mm to 30 mm. The nozzle 212 may be optionally heated to a temperature in the range of from -17.8°C to 93.3°C using external or internal heaters (not shown).

As shown in Figure 8, the nozzle 210 is oriented with respect to the tire building drum A, core (not shown) or other application surface typically at an angle β in the range of from 0 to 50 degrees, more typically in the range of from 20 to 35 degrees. The rubber from the nozzle is first adhered to the roller 300, and then pushed through the nozzle outlet and then applied by the rotating roller 300 to the tire building drum A, as shown in Figure 8. A stitcher roller 400 is positioned adjacent the roller 300, and applies pressure to secure the strip onto the drum. The stitcher roller 400 is attached to link arm 402 that is pivotally connected to the support frame 110. The stitcher roller 400 is connected to actuator arm 404 connected to actuator 406.

The roller assembly 300 preferably has internal heaters for heating the outer surface in the range of from 93.3°C to 204.4°C, and more preferably in the range of 176.7°C to 204.4°C. Thus, the roller functions as a hot knife, smoothing and smearing the freshly deposited rubber, melting and blending the adjacent strips of rubber together, into a homogeneous mass. The higher roller temperature does not impact the curing of rubber due to the short residence time. The stitcher assembly 400 performs a stitcher function due to the pressure of the roller against the drum, smoothing out the air pockets. The outer surface of the roller also helps shape the formed component.

The roller assembly 300 preferably is connected to a linkage system 500 connected to an air cylinder as shown in Fig. 4, so that the roller 300 may be raised and lowered.

The following steps describe the formation of a tire component such as a sidewall, chafer, liner, or other elastomeric article. Rubber or elastomer is fed to a pumping means, such as an injector, gear pump, extruder or combination thereof. The rubber extrudate is pumped into the rubber applicator apparatus by the pumping means. In the applicator apparatus, the elastomeric material is fed from the extruder or pumping means (not shown) into an internal passage of the transition member. The internal passage of the transition member decreases in area and utilizes gravity to push the rubber down the internal passage. The elastomer or rubber flow exits the interior passage and enters a nozzle. The nozzle has a curved lower surface having an opening that is positioned in mating engagement with the roller. The opening on the lower curved surface of the nozzle has a wide area that presses the rubber directly onto the roller surface. As the roller rotates, it pulls the rubber through the nozzle towards the nozzle outlet. The pulling action by the roller reduces the temperature and pressure of the rubber, as less extruder pressure is needed to pump the rubber through the system. As the rubber exits the nozzle, it is shaped as it passes through the nozzle outlet by the die surfaces 217, 218, 219 forming a shaped strip of rubber. The strip of rubber is then immediately applied to a mandrel or tire building surface. The nozzle assembly is capable of translating in three directions in discrete index positions in order to accurately apply the rubber to the building surface. The support surface can be is a toroid shaped core or a cylindrical shaped tire building drum, or any other desired shape. The primary advantage of applying the strip to a toroidially shaped surface is the finished part is accurately positioned in a green uncured state at the proper orientation to be molded without requiring any change in orientation from the condition in which the strip was initially formed.

The extrudate exits the nozzle in a strip form, having the desired shape of the exit orifice of the nozzle. If a drum or toroid is used as an applicator surface, as the drum or core rotates, a continuous annular strip may be formed. The nozzle can be indexed axially so to form the desired shape of the component. The nozzle can be controlled by a control system wherein the movement of the nozzle so that the multiple layers of strip dictates the shape of the desired tire component.

## Claims

1. An apparatus for applying a strip of elastomeric material to a surface, the apparatus comprising a nozzle (210) having an inlet (202) in fluid communication with a pumping means, the nozzle (210) having an upper surface and a lower surface, wherein the lower surface has a curved shape for mating engagement with an outer surface of a rotatable roller (300), wherein the lower surface further has an opening (231) which is configured to be positioned onto the roller outer surface and which has an axial width (A) and a longitudinal length (L), wherein the longitudinal length (L) is greater than 1.5 times the axial width (A).

2. The apparatus of claim 1, wherein the nozzle (210) is configured to compress the elastomeric material directly onto the outer surface of the roller (300).

3. The apparatus of claim 1 or 2, wherein the elastomeric material is in a molten state in the nozzle (210) and/or in the apparatus (100).

4. The apparatus of at least one of the previous claims, wherein the elastomeric material is in a molten state prior to entering the apparatus (100) and/or wherein the elastomeric material is in a molten state when it is applied to the roller outer surface.

5. The apparatus of at least one of the previous claims, wherein the nozzle (210) has a shaped die surface (216) that cooperates with the curved outer surface of the roller (300) to form a nozzle outlet.

6. The apparatus of at least one of the previous claims, wherein said roller configured to be heated to a temperature in the range of from 93°C to 177°C.

7. The apparatus of at least one of the previous claims, wherein the pumping means is an extruder or an extruder in combination with a gear pump.

8. The apparatus of at least one of the previous claims, wherein the apparatus comprises an interior channel (126) in connection with the nozzle (210), wherein the interior channel (126) decreases in area, preferably towards the nozzle (210).

9. The apparatus of at least one of the previous claims, wherein the outlet of the nozzle (210) is V shaped.

10. A method of forming a strip of elastomeric material, the method comprising the steps of:
providing an apparatus in accordance with claim 1;
pumping an elastomeric material through the nozzle (210);
positioning an opening of the nozzle (210) in mating engagement with the rotatable roller (300);
rotating the roller (300) so that the rotation of the roller (300) pulls the elastomeric material through the outlet of the nozzle (210); and
forming a strip.

11. The method of claim 10, wherein the roller outer surface is heated to a temperature in the range of from 93.3°C to 204.4°C.

12. The method of claim 10, wherein the outlet of the nozzle (210) is formed between the roller outer surface and an edge of the nozzle (210).

13. The method of at least one of the claims 10 or 11, further comprising the steps of pumping the molten elastomeric material through a die positioned at the outlet of the nozzle (210) and then forming a shaped elastomer strip onto an outer surface of the rotating roller (300).

14. The method of at least one of the claims 10 to 12, further comprising the steps of pressing the roller (300) against a tire building drum so that the strip of rubber adheres to the surface of the tire building drum.

15. The method of at least one of the claims, wherein said nozzle (210) compresses said elastomeric material directly onto the outer surface of the roller (300).

## Patentansprüche

1. Einrichtung zum Aufbringen eines Streifens von elastomerem Material auf eine Oberfläche, wobei die Einrichtung eine Düse (210) mit einem Einlass (202) in Fluidverbindung mit einer Pumpeinrichtung umfasst, wobei die Düse (210) eine obere Oberfläche und eine untere Oberfläche aufweist, wobei die untere Oberfläche eine gekrümmte Form zum Passeingriff mit einer äußeren Oberfläche einer drehbaren Walze (300) aufweist, wobei die untere Oberfläche ferner eine Öffnung (231) aufweist, die konfiguriert ist, um auf der äußeren Oberfläche der Walze positioniert zu werden, und die eine axiale Breite (A) und eine longitudinale Länge (L) aufweist, wobei die longitudinale Länge (L) größer als das 1,5-fache der axialen Breite (A) ist.

2. Einrichtung nach Anspruch 1, wobei die Düse (210) konfiguriert ist, um das elastomere Material direkt auf die äußere Walzenoberfläche (300) zu pressen.

3. Einrichtung nach Anspruch 1 oder 2, wobei das elastomere Material in einem geschmolzenen Zustand in der Düse (210) und/oder in der Einrichtung (100) ist.

4. Einrichtung nach wenigstens einem der vorhergehenden Ansprüche, wobei das elastomere Material vor einem Eintreten in die Einrichtung (100) in einem geschmolzenen Zustand ist und/oder wobei das elastomere Material in einem geschmolzenen Zustand ist, wenn es auf die äußere Walzenoberfläche aufgebracht wird.

5. Einrichtung nach wenigstens einem der vorhergehenden Ansprüche, wobei die Düse (210) eine Formdüsenoberfläche (216) aufweist, die mit der gekrümmten äußeren Oberfläche der Walze (300) zusammenwirkt, um einen Düsenauslass auszubilden.

6. Einrichtung nach wenigstens einem der vorhergehenden Ansprüche, wobei die Walze konfiguriert ist, um auf eine Temperatur in dem Bereich von bis 93 °C bis 177 °C erwärmt zu werden.

7. Einrichtung nach wenigstens einem der vorhergehenden Ansprüche, wobei das Pumpmittel ein Extruder oder ein Extruder in Kombination mit einer Zahnradpumpe ist.

8. Einrichtung nach wenigstens einem der vorhergehenden Ansprüche, wobei die Einrichtung einen Innenkanal (126) in Verbindung mit der Düse (210) umfasst, wobei der Innenkanal (126) in der Fläche abnimmt, bevorzugt in Richtung der Düse (210).

9. Einrichtung nach wenigstens einem der vorhergehenden Ansprüche, wobei der Auslass der Düse (210) V-förmig ist.

10. Verfahren zum Ausbilden eines Streifens von elastomerem Material, wobei das Verfahren die folgenden Schritte umfasst:
Bereitstellen einer Einrichtung nach Anspruch 1;
Pumpen eines elastomeren Materials durch die Düse (210);
Positionieren einer Öffnung der Düse (210) in Passengriff mit der drehbaren Walze (300);
Drehen der Walze (300), sodass die Drehung der Walze (300) das elastomere Material durch den Auslass der Düse (210) zieht; und
Ausbilden eines Streifens.

11. Verfahren nach Anspruch 10, wobei die äußere Walzenoberfläche auf eine Temperatur in dem Bereich von 93,3 °C bis 204,4 °C erwärmt wird.

12. Verfahren nach Anspruch 10, wobei der Auslass der Düse (210) zwischen der äußeren Walzenoberfläche und einer Kante der Düse (210) ausgebildet wird.

13. Verfahren nach wenigstens einem der Ansprüche 10 oder 11, ferner umfassend die Schritte des Pumpens des geschmolzenen elastomeren Materials durch ein Formwerkzeug, das an dem Auslass der Düse (210) positioniert ist, und dann des Ausbildens eines geformten elastomeren Steifens auf eine äußere Oberfläche der drehenden Walze (300).

14. Verfahren nach wenigstens einem der Ansprüche 10 bis 12, ferner umfassend die Schritte des Drückens der Walze (300) gegen eine Reifenaufbautrommel, sodass der Streifen aus Kautschuk an der Oberfläche der Reifenaufbautrommel haftet.

15. Verfahren nach wenigstens einem der Ansprüche, wobei die Düse (210) das elastomere Material direkt auf die äußere Oberfläche der Walze (300) presst.

## Revendications

1. Appareil destiné à appliquer une bande de matière élastomère sur une surface, l'appareil comprenant une buse (210) possédant une entrée (202) mise en communication par fluide avec un moyen de pompage, la buse (210) possédant une surface supérieure et une surface inférieure ; dans lequel la surface inférieure possède une configuration de forme courbe pour une mise en contact par accouplement avec une surface externe d'un galet rotatif (300) ; dans lequel la surface inférieure possède en outre une ouverture (231) qui est configurée pour venir se disposer sur la surface externe du galet et qui possède une largeur axiale (A) et une longueur longitudinale (L) ; dans lequel la longueur longitudinale (L) est supérieure, à concurrence de 1,5 fois, à la largeur axiale (A).

2. Appareil selon la revendication 1, dans lequel la buse (210) est configurée pour comprimer la matière élastomère directement sur la surface externe du galet (300).

3. Appareil selon la revendication 1 ou 2, dans lequel la matière élastomère se trouve dans un état en fusion dans la buse (210) et/ou dans l'appareil (100).

4. Appareil selon au moins une des revendications précédentes, dans lequel la matière élastomère se trouve dans un état en fusion avant de pénétrer dans l'appareil (100) et/ou dans lequel la matière élastomère se trouve dans un état en fusion lorsqu'elle est appliquée sur la surface externe du galet.

5. Appareil selon au moins une des revendications précédentes, dans lequel la buse (210) possède une surface de filière configurée (216) qui coopère avec la surface externe courbe du galet (300) pour former une sortie de buse.

6. Appareil selon au moins une des revendications précédentes, dans lequel ledit galet est configuré pour être chauffé jusqu'à une température qui se situe dans la plage de 93 °C à 177 °C.

7. Appareil selon au moins une des revendications précédentes, dans lequel le moyen de chauffage est une extrudeuse ou une extrudeuse en combinaison avec une pompe à engrenages.

8. Appareil selon au moins une des revendications précédentes, dans lequel l'appareil comprend un canal interne (126) mis en liaison avec la buse (210) ; dans lequel le canal interne (126) possède une superficie qui diminue, de préférence en direction de la buse (210).

9. Appareil selon au moins une des revendications précédentes, dans lequel la sortie de la buse (210) possède une configuration en forme de V.

10. Procédé de formation d'une bande de matière élastomère, le procédé comprenant les étapes consistant à :
procurer un appareil selon la revendication 1 ;
pomper une matière élastomère à travers la buse (210) ;
disposer une ouverture de la buse (210) en contact par accouplement avec le galet rotatif (300) ;
mettre le galet (300) en rotation d'une manière telle que la rotation du galet (300) tire la matière élastomère à travers la sortie de buse (210) ; et
former une bande.

11. Procédé selon la revendication 10, dans lequel la surface externe du galet est chauffée jusqu'à une température qui se situe dans la plage de 93,3 °C à 204,4 °C.

12. Procédé selon la revendication 10, dans lequel la sortie de la buse (210) est réalisée entre la surface externe du galet et un bord de la buse (210).

13. Procédé selon au moins une des revendications 10 ou 11, comprenant en outre les étapes consistant à pomper la matière élastomère en fusion à travers une filière disposée à la sortie de la buse (210) et à ensuite former une bande élastomère configurée sur une surface externe du galet (300) mis en rotation.

14. Procédé selon au moins une des revendications 10 à 12, comprenant en outre les étapes consistant à comprimer le galet (300) contre un tambour de confection d'un bandage pneumatique, d'une manière telle que la bande de caoutchouc adhère à la surface du tambour de confection d'un bandage pneumatique.

15. Procédé selon au moins une des revendications précédentes, dans lequel ladite buse (210) comprime ladite matière élastomère directement sur la surface externe du galet (300).
